(19) Europäisches Patentamt
European Patent Office
Office européen des brevets

(11) **EP 0 787 047 B1**

(12) **EUROPÄISCHE PATENTSCHRIFT**

(45) Veröffentlichungstag und Bekanntmachung des Hinweises auf die Patenterteilung:
**20.09.2000 Patentblatt 2000/38**

(21) Anmeldenummer: **95935331.9**

(22) Anmeldetag: **13.10.1995**

(51) Int Cl.⁷: **B21D 41/02**

(86) Internationale Anmeldenummer:
**PCT/DE95/01423**

(87) Internationale Veröffentlichungsnummer:
**WO 96/12578 (02.05.1996 Gazette 1996/20)**

(54) **VERFAHREN ZUM ANSTAUCHEN VON ROHRENDEN UND VORRICHTUNG ZUR DURCHFÜHRUNG DES VERFAHRENS**

PROCESS FOR HEADING PIPE ENDS AND DEVICE FOR IMPLEMENTING IT

PROCEDE PERMETTANT DE REFOULER DES EXTREMITES TUBULAIRES ET DISPOSITIF DE MISE EN UVRE DUDIT PROCEDE

(84) Benannte Vertragsstaaten:
**DE ES FR GB IT**

(30) Priorität: **19.10.1994 DE 4437395**

(43) Veröffentlichungstag der Anmeldung:
**06.08.1997 Patentblatt 1997/32**

(73) Patentinhaber:
• **FAHRZEUGWERK WERDAU GmbH & Co. KG**
**08412 Werdau (DE)**
• **AUDI AG**
**85045 Ingolstadt (DE)**

(72) Erfinder:
• **OSWALD, Jürgen**
**D-39120 Magdeburg (DE)**
• **JANSSEN, Manfred**
**D-47803 Krefeld (DE)**
• **BESTE, Andreas**
**D-85080 Gaimersheim (DE)**
• **LIPOWSKY, Hansjörg**
**D-85120 Hepberg (DE)**

(74) Vertreter: **Geissler, Manfred**
**Audi AG,**
**Abteilung I/EK-P**
**85045 Ingolstadt (DE)**

(56) Entgegenhaltungen:
**DE-U- 8 809 031          US-A- 5 203 194**

**Beschreibung**

Die Erfindung betrifft ein Verfahren zum Anstauchen von Rohrenden. Weiterhin wird eine Vorrichtung zur Durchführung des Verfahrens vorgeschlagen.

Rohrförmige Maschinenbaugruppen, beispielsweise Abgasanlagen für Verbrennungsmotoren werden bisher überwiegend aus Rohren einheitlicher Querschnittsabmessungen gefertigt.

Teile solcher Baugruppen mit funktionsbedingt veränderten Querschnittsabmessungen werden dabei üblicherweise mittels Flanschen, Schweißungen oder auf andere Weise in die Baugruppe eingefügt, beispielsweise zum Zwecke des Befestigens von besonderen Maschinenelementen oder Baugruppen. Solche Baugruppen und Maschinenelemente können unter anderem Schalldämpfer, Katalysatoren oder Anschlußflansche sein.

Die Konsequenz solcher Vorgehensweise besteht einmal in einem hohen Fertigungsaufwand und zum anderen neben hohen Fertigungszeiten in mehr oder weniger funktionsbeeinträchtigenden Störungen des Strömungsbildes infolge zusätzlicher Inhomogenitäten an der Innenwand der rohrförmigen Maschinenbaugruppe.

Üblicherweise versucht man, diesen Konsequenzen dadurch aus dem Wege zu gehen, indem unter Inkaufnahme zusätzlichen Materialverbrauchs und einer unnötig hohen Fertigungsmasse die Dimensionierung der Querschnittsabmessungen für die zu verwendenden Rohre nach den zu erwartenden höchsten mechanischen und/oder thermischen Beanspruchungen vorgenommen wird.

Diese Vorgehensweise führt nunmehr zu dem Nachteil, daß erforderliche Umformprozesse, beispielsweise zum Herstellen von Rohrbögen, unter schwierigeren Bedingungen durchgeführt werden müssen.

Aus der US-A 5,203,194 ist ein Verfahren zur Herstellung einer Anhängerkupplung bei Kraftfahrzeugen bekannt. Ein Endabschnitt eines quadratische Querschnittsform aufweisenden Profilstückes wird dabei durch Einleiten eines Axialdruckes gestaucht. Besondere Qualitätsanforderungen an Maßhaltigkeit bzw. strömungsgünstige und homogene Innenwand nach der Umformung bestehen dabei nicht.

Aufgabe der Erfindung ist es, ein Verfahren zum Anstauchen von Rohrenden und die Vorrichtung zur Durchführung des Verfahrens zu schaffen, mit deren Hilfe ein rohrförmiges Bauelement mit den im allgemeinen optimalen Querschnittsabmessungen so mit Endabschnitten verstärkter Querschnittsabmessungen ausgestattet werden kann, daß der Innendurchmesser praktisch übergangslos auch im Bereich des Rohrendes unverändert erhalten bleibt und dennoch für das Anfügen von Komponenten, wie Verbindungs- und Anschlußflansche, Schalldämpfer, Katalysatoren u.a., die erforderlichen Querschnittsabmessungen verfügbar sind. Zur Lösung der Aufgabe wird deshalb eine Technik benötigt, mit deren Hilfe möglichst unter Vermeidung thermischer Überbeanspruchung das gewünschte Umformen rationell durchgeführt werden kann.

Erfindungsgemäß wird die Aufgabe durch ein Verfahren nach Anspruch 1 gelöst.

An sich wurde bereits in dem DE 88 09 031 U1 (nächstliegender Stand der Technik) eine Vorrichtung zum Umformen von Metallrohrstücken vorgeschlagen, bei der die erforderliche Formmatrize durch ein wenigstens vierteiliges Hydraulikpreßsystem gebildet ist, das zusätzlich Rohrstückhalterungen aufweist. Zur Vermeidung von unerwünschten Verformungen beim axialen Belasten der umzuformenden Rohrstücke wird durch wenigstens einen der verwendeten Axialkolben ein Stützfluid in das Rohrinnere gefördert.

Für das Anstauchen von Rohrenden an gebogenen oder ungebogenen Rohrstücken bietet diese technische Lösung keinen Hinweis, da aufgabengemäß in erster Linie Aufweitungen von Rohrstücken zur wenigstens teilweisen Vergrößerung des Innendurchmessers bei Inkaufnahme von partiellen Wanddickenverminderungen erreicht werden sollen.

Die Erfindung beschreibt weiterhin eine besonders geeignete Vorrichtung, bei der ein Kolben in das anzustauchende Rohr von der Stirnseite her eingeführt wird, wobei dieser Kolben durch eine entsprechende Schulter das Rohrende von seiner Stirnseite her in Axialrichtung eindrückt, während zugleich durch entsprechende Öffnungen ein Druck auf die Rohrinnenwand, beispielsweise über ein Fluid, erzielt wird, der mit Unterstützung des Axialdruckes zu einer Verstärkung der Rohrwandung im vorderen Bereich führt. Durch entsprechende Ausbildung der Matrize, in der das Rohr eingelegt ist, wird die bei dem Verformen sich ergebende geometrische Ausbildung der Wand definiert. Günstig ist dabei, daß zugleich das Rohr im übrigen Bereich unter dem Fluiddruck gehalten wird, um eine sichere Anlage des Rohres auch in diesem Bereich an der Matrize zu erzielen.

Es findet also ein Kaltumformen mittels eines Werkzeugsatzes statt, wobei der Werkzeugsatz im wesentlichen aus einer profilierten Hohl- oder Ringmatrize und einem oder mehreren Axialkolben besteht. Mit Hilfe dieses Werkzeugsatzes und mehrdimensionaler Belastung, insbesondere des umzuformenden Rohrendes wird ein Fließpreßvorgang bewirkt. Dazu wird das umzuformende Rohrende zunächst bedarfsweise mit einer stirnseitigen Dichtfläche ausgestattet und danach in eine profilierte Matrize, ausgebildet als ein- oder mehrteilige Hohl- oder Ringmatrize, eingelegt.

Anschließend wird ein abgesetzter Axialkolben so in das anzustauchende Rohrende eingeschoben, daß die Dichtschulter des Axialkolbens an der Dichtfläche des umzuformenden Rohrendes anliegt. Daraufhin erfolgt bei gleichzeitiger Lagefixierung des Axialkolbens in Längsrichtung durch eine Axialbohrung des Axialkolbens die Förderung einer Druckflüssigkeit derartig durch den Axialkolben, daß es sowohl zu einer den Preßsitz eines vor dem Axialkolben bis zu einem festen Matrizenboden, bis zu einem weiteren Axialkolben oder bis zu einem Verschluß des freien Rohrendes liegenden Rohrbereiches in der Matrize bewirkenden Verformung als auch mittels radialer Bohrungen zu einer radialen Belastung des umzuformenden Rohrendes kommt.

Der Axialkolben wird nunmehr mit einer definierten axialen Schubkraft belastet, unter deren Wirkung die plastische Verformung des Rohrendes solange erfolgt, bis der zwischen der Haltekante der Matrize und der Dichtschulter des Axialkolbens befindliche Hohlraum mit dem gestauchten Material des umzuformenden Rohrendes ausgefüllt ist.

Im Preßsitzbereich wird das Rohrinnere ebenfalls durch die Druckflüssigkeit in radialer Richtung belastet, ohne daß es dort wegen des unmittelbaren Anliegens der Rohrwand an der Matrize zu einer Verformung kommen kann. Im Gegensatz dazu findet im Stauchbereich unter der Wirkung der radialen Belastung durch die Druckflüssigkeit auch eine tangentiale Belastung der Rohrwand im Zuge des eingeleiteten Aufweitungsprozesses und zugleich die axiale Druckbelastung durch die Schubkraft des Axialkolbens statt. Die daraus resultierende mehrdimensionale Belastung übersteigt definiert den elastischen Verformungswiderstand und führt zur gewünschten plastischen Verformung. Als Druckflüssigkeit sind prinzipiell alle inkompressiblen Fluids geeignet.

In einer besonderen Ausführungsform des Verfahrens ist vorgesehen, als Druckflüssigkeit Wasser, vorzugsweise Wasser mit synthetischen Zusätzen, zu verwenden.

In einer weiteren Ausführungsform ist vorgesehen, bedarfsweise die axiale Schubkraft FA gemeinsam mit dem Innendruck pi in Abhängigkeit von der offenen Rohrquerschnittsfläche AR nach der Beziehung

$$F_A \geqq 1,1 * A_R * p_i$$

zu steigern.

Damit wird unter anderem sichergestellt, daß es keinesfalls infolge einseitig gesteigerter axialer Schubkräfte zum Ausknicken der Rohrwand im Preßsitzbereich kommt.

Es ist außerdem möglich, daß die Matrize und/oder der Axialkolben im Bereich der zu bewirkenden Rohrverdickung mit einer die Reibung zwischen Rohr und Werkzeug vermindernden Beschichtung ausgestattet wird. Auf diese Weise werden die eingeleiteten Kräfte in maximalem Umfang für den plastischen Umformvorgang wirksam gemacht, ohne daß es zu nennenswerten Reibungsverlusten kommt.

Dieser Zielrichtung dient auch der Vorschlag, daß die Wirkfuge im erweiterten Bereich der Matrize mit einer die Reibung zwischen Rohr und Werkzeug vermindernden Schmiermittelfüllung versehen wird.

Zum Einsatz kommt eine Vorrichtung, die aus einer profilierten Matrize, ausgebildet als geschlossene Hohlmatrize, als geteilte Hohlmatrize oder als geteilte Ringmatrize, und wenigstens einem abgesetzten Axialkolben besteht. Der Axialkolben besitzt eine zentrale axiale Bohrung und im Stauchbereich vor der Dichtschulter radiale sternförmig angeordnete Bohrungen für die Druckmittelförderung an die umzuformende Rohrinnenwand. Weiterhin ist der Übergang vom lichten Durchmesser der Matrize zum aufgeweiteten Teil der Matrizenprofilierung im Stauchbereich als Haltekante ausgebildet. Der Übergang vom die radialen Bohrungen aufweisenden Bereich des Axialkolbens zum den erweiterten Bereich der Matrize abschließenden Bereich des Axialkolbens ist als Dichtschulter ausgebildet.

In einer bevorzugten Ausführungsform ist die Matrize als geschlossene einteilige oder mehrteilige Hohlmatrize ausgebildet, die mit einen Hohlmatrizenboden ausgestattet ist.

Insbesondere für das Anstauchen der Enden von gebogenen Rohrstücken, sowie für das Anstauchen beider Enden von geraden Rohrstücken ist die Matrize als geteilte Ringmatrize ausgebildet.

Im Falle der Ausgestaltung der Matrize als Hohlmatrize besteht eine bevorzugte Ausführungsform darin, daß der Boden der Hohlmatrize mit einer die Rohrwand erfassenden und als Dichtelement fungierenden Spitznut ausgestattet ist. Die Spitznut fungiert dabei als Auflauffläche, die mit zumindest einer Kante der kreisringförmigen Querschnittsfläche der Rohrwand im Kontakt steht und bei axialer Belastung des Rohres eine Dichtpaarung zur Verhinderung des Austritts der Druckflüssigkeit aus dem Rohrinneren bildet.

In einer weiteren Ausführungsform ist zwischen der Stirnseite des Axialkolbens und dem Ende der Matrize ein Preßsitzbereich angeordnet.

Dieser Preßsitz ermöglicht, daß auch im Falle des nicht Aufsitzens des Rohrstückes auf dem Matrizenboden eine ausreichende Lagefixierung des Rohrstückes in der Matrize gewährleistet ist, so daß es bei axialer Belastung des Rohrstücks durch den Axialkolben nicht zu einer Verschiebung des Rohrstücks in der Matrize kommen kann. Dies ist eine Vorraussetzung dafür, mit Hilfe eines einzigen Werkzeugsatzes gegebenenfalls Rohrstücke verschiedener Länge anzustauchen.

Der Preßsitzbereich kann sowohl zwischen der Stirnseite des Axialkolbens und dem Boden der Hohlmatrize, als auch, vorzugsweise in einer geteilten Ringmatrize, zwischen der Stirnseite des Axialkolbens und einem Rohrverschluß oder zwischen den Stirnseiten von zwei Axialkolben ausgebildet sein.

Eine vorteilhafte Ausgestaltung der erfindungsgemäßen Vorrichtung sieht vor, daß die stirnseitig am anzustauchenden Rohrende angeordnete Dichtfläche durch spanabhebende oder kaltumformende Verfahren als quer zur Längsachse des Axialkolbens ausgerichtete Kreisringfläche oder als rotationssymmetrische Fläche ausgebildet ist. Diese Dichtfläche bildet mit der Dichtschulter als quer zur Längsachse des Axialkolbens ausgerichtete ebene Kreisringfläche und/oder als auf die Längsachse des Axialkolbens bezogene rotationssymmetrisch ausgebildete Fläche eine weitere Dichtpaarung.

Diese Dichtung verhindert den Austritt von Druckflüssigkeit aus dem Rohrinneren im Bereich des anzustauchenden Rohrendes.

Eine weitere Ausgestaltung der erfindungsgemäßen Vorrichtung ist dadurch gekennzeichnet, daß die Profilierung der Matrize in Form eines am umzuformenden Rohrstück anliegenden Abschnittes und einem weiteren Abschnitt mit einer Aufweitung auf wenigstens das Maß des Außendurchmessers des angestauchten Rohrendes ausgeführt ist.

Eine bevorzugte Form der Vorrichtung erfordert, daß die geteilte Ringmatrize für das gleichzeitige und beiderseitige Anstauchen von geraden oder gebogenen Rohrstücken mit zwei Matrizenprofilierungen und mit zwei Axialkolben ausgestattet ist.

Bei dieser Ausführungsform ist es notwendig, in einem Arbeitsgang sowohl den Innendruck mittels Druckflüssigkeit herzustellen als auch die Axialkolben jeweils mit axialen Schubkräften zu belasten. Allerdings werden dabei auf vereinfachte Weise gleichzeitig zwei Anstauchbereiche umgeformt und für weitere Bearbeitungsprozesse bereitgestellt, wobei die angestauchten Rohrenden mit unterschiedlichen Abmessungen ausgestattet werden können.

Schließlich kann es auch von Vorteil sein, daß die geschlossene Hohlmatrize mit ansich bekannten das Auswerfen des angestauchten Rohrstücks sichernden Auswerfeinrichtungen ausgeführt ist.

Die Vorteile der Erfindung bestehen vor allem darin, daß bei minimalem Materialverbrauch massereduzierte und strömungstechnisch optimale rohrförmige Baugruppen hergestellt werden können, ohne die bisherigen zeit- und kostenaufwendige Fügeprozeduren dafür in Kauf nehmen zu müssen.

Gleichermaßen wird das Anwenden thermisch belastender Techniken, insbesondere in Bereichen erhöhter mechanischer Belastung, in hohem Maße reduzierbar.

Die Erfindung soll nachstehend an Ausführungsbeispielen näher erläutert werden.

In der beiliegenden Zeichnung zeigen:

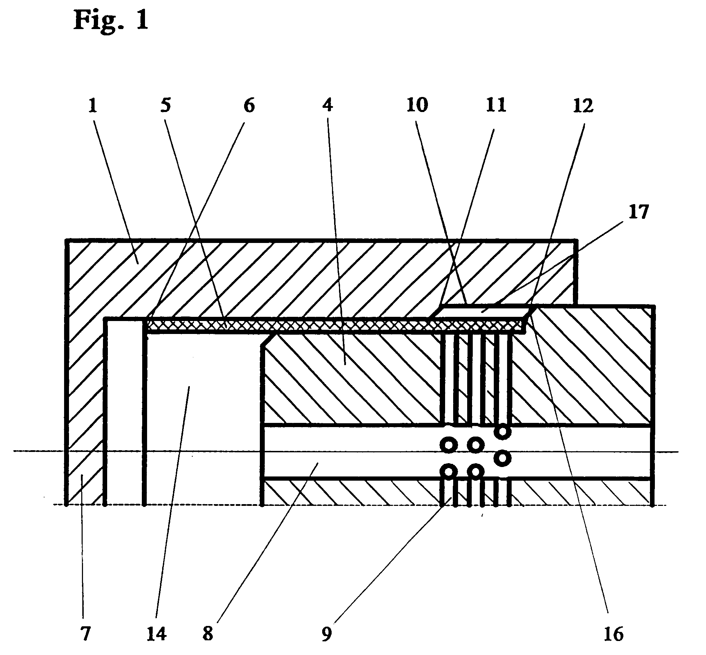

Fig. 1: die schematische Schnittdarstellung einer Vorrichtung zum Zeitpunkt des Arbeitsbeginns, bestehend aus einer Hohlmatrize und einem abgestuften Axialkolben mit Bohrungen für das Druckmedium ( bei Fixierung des Rohrstücks in der Matrize durch den vor dem Axialkolben aufgebauten Innendruck, der zum Preßsitz des Rohrstücks in der Hohlmatrize führt);

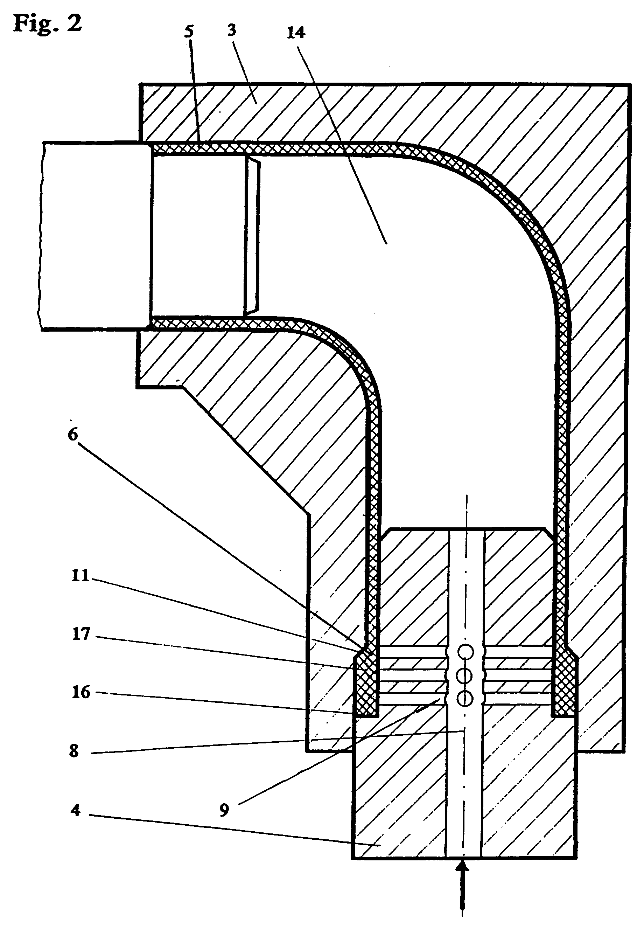

Fig. 2: die schematische Schnittdarstellung einer Vorrichtung am Ende des Stauchvorgangs, bestehend aus einer geteilten Ringmatrize und einem abgestuften Axialkolben mit Bohrungen für das Druckmedium ( bei axialer Fixierung des Rohrstücks durch einen Preßsitz, der durch Druckflüssigkeit zwischen einem Rohrverschluß und der Stirnseite des Axialkolbens erzeugt wird);

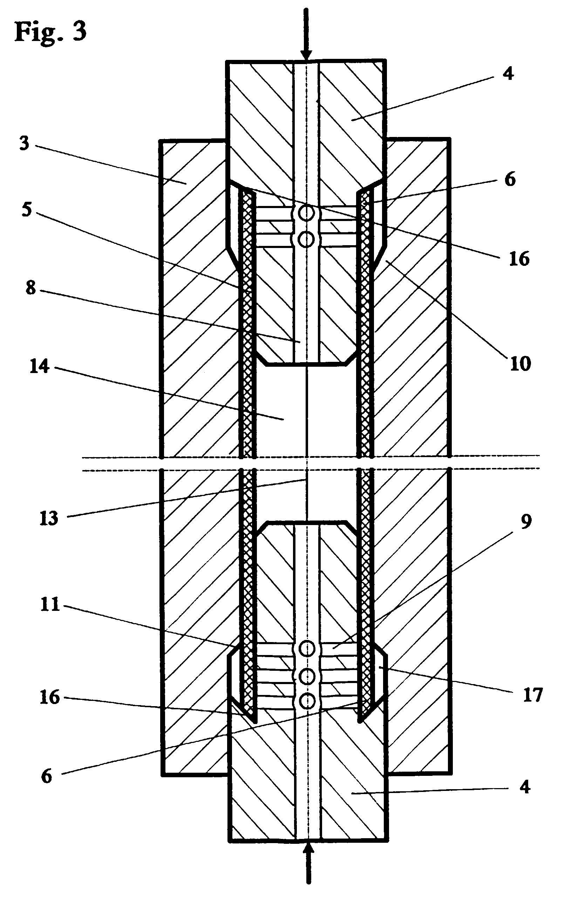

Fig. 3: die schematische Schnittdarstellung einer Vorrichtung bei Beginn des Stauchvorganges, bestehend aus einer parallel zur Längsachse geteilten Ringmatrize und zwei abgestuften Axialkolben und

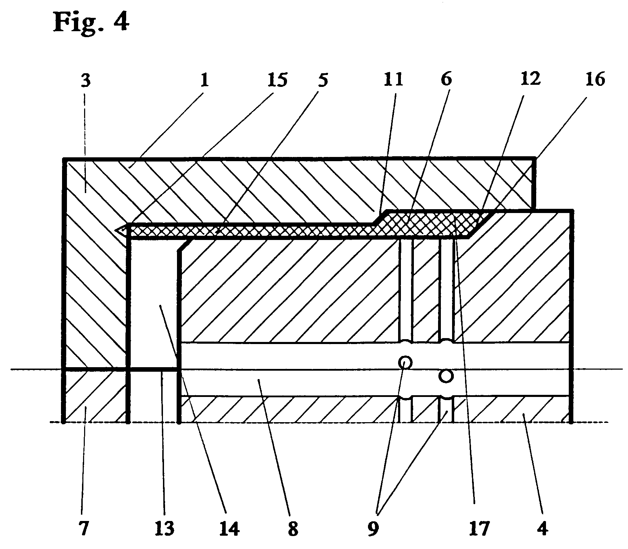

Fig. 4: die schematische Schnittdarstellung einer Vorrichtung zum Ende des Stauchvorgangs, bestehend aus einer geteilten Hohlmatrize und einem abgestuften Axialkolben mit Bohrungen für das Druckmedium bei axialer Fixierung des Rohrstücks durch den Anschlag am Boden der Hohlmatrize.

Ausführungsbeispiel 1:

Benötigt wird das Endstück einer Pkw-Auspuffanlage, daß am Nachschalldämpfer mittels Schweißverbindung befestigt werden soll. Dazu wird, wie aus Fig. 1 oder Fig. 4 ersichtlich, ein Stahlrohr mit einer Wanddicke von 1,5 mm bei einem Rohraußendurchmesser von 60 mm als 600 mm langes Rohrstück 5 in eine einteilige geschlossene Hohlmatrize 1 eingeführt. Die Hohlmatrize 1 besitzt einen Boden 7, der im Randbereich zur Matrizenwandung mit einer Spitznut 15 ausgestattet ist. Die 3 mm breite Spitznut 15 nimmt das Rohrstück 5 so auf, daß zwischen der Innenkante der Rohrwand und der inneren Flanke der Spitznut 15 unter axialer Belastung des Rohrstücks eine Dichtpaarung entsteht, indem die Flanke der Spitznut 15 und die Innenkante der Rohrwandung bei örtlicher plastischer Deformation der Rohrwandung dicht aneinander anliegen.

Die Hohlmatrize 1 besitzt über eine Länge von 540 mm einen Innendurchmesser von etwa 60 mm. Über eine Länge von 60 mm ist der Innendurchmesser der Hohlmatrize 1 auf 63 mm erweitert. Der Übergang vom kleineren zum größeren Durchmesser ist als Absatz mit einem Winkel von 30° gegenüber der Senkrechten zur Matrizenlängsachse geneigten Haltekante 11 ausgebildet.

Zum Werkzeugsatz gehört außerdem ein Axialkolben 4, der mit einer durchgehenden axialen Bohrung für das Druckmedium 8 ausgestattet ist.

Der profilierte Axialkolben 4 besteht aus einem in das Rohrstück 5 einzuführenden 100 mm langen Teil mit einem Außendurchmesser von etwa 57 mm.

An diesen Bereich des profilierten Axialkolbens 4 schließt sich ein weiterer 100 mm langer Bereich mit einem Außendurchmesser von etwa 63 mm an. Der Übergang vom kleinen auf den großen Außendurchmesser des Axialkolbens 4 ist als Dichtschulter 16 ausgebildet, deren axiale Schnittfläche 15 ° zur Senkrechten der Längsachse des Axialkolbens 4 geneigt ist.

Zwischen der Dichtschulter 16 und der Haltekante 11 bildet sich zwischen dem Axialkolben 4 und der Hohlmatrize 1 die Wirkfuge 17 aus.

Der Axialkolben 4 besitzt im Bereich mit dem kleineren Durchmesser in einem Abstand von bis zu 50 mm von der Dichtschulter 16 insgesamt drei Reihen sternförmig angeordneter radialer Bohrungen 9 mit einem Durchmesser von jeweils 6 mm, die zwischen der axialen Bohrung 8 und der Umfangsfläche des Axialkolbens 4 angeordnet sind. Je Bohrungsreihe sind versetzt sechs Einzelbohrungen im Winkel von 60 ° angeordnet.

Der Axialkolben 4 wird nach dem Anliegen mit seiner Dichtschulter 16 an der Dichtfläche 12 des Rohrstücks 5 zunächst mit einer axialen Schubkraft von 5 kN belastet.

Daraufhin wird durch die axiale Bohrung 8 Druckflüssigkeit in Form von Wasser durch den Axialkolben 4 gepumpt und anschließend mit einem Druck in Höhe von 0,5 MPa belastet. In dieser Situation bildet sich sowohl zwischen der Stirnseite des Axialkolbens 4 und dem Boden der Hohlmatrize 7 ein Preßsitzbereich 14 aus, in dem das an der Matrizenwandung anliegende Rohrstück 5 gegen Ausknicken durch die unter Druck stehende Druckflüssigkeit gestützt wird. Die Druckflüssigkeit liegt gleichermaßen über die radialen Bohrungen für das Druckmedium 9 verteilt am zu stauchenden Rohrende 6 an. Mit der Vergrößerung der axialen Schubkraft FA auf den axialen Kolben bis auf einen Wert von über 100 kN und der gleichzeitigen Vergrößerung des Innendrucks pi der Druckflüssigkeit auf wenigstens 15 MPa erfolgt das plastische Umformen des Rohrendes 6 bis zur vollständigen Ausfüllung der Wirkfuge 17 mit dem gestauchten Rohrmaterial. Das wandverstärkte Rohrende 6 besitzt einen unveränderten Innendurchmesser, jedoch eine auf 3 mm verstärkte Wanddicke, wobei sich die Länge des Rohrendes 6 etwa zu 30 mm ergibt.

Nach Abschluß des Umformprozesses wird der Axialkolben 4 aus der Hohlmatrize 1 bei gleichzeitiger Entspannung der Druckflüssigkeit herausgefahren.

Danach werden drei Stück auf den Umfang der Spitznut 15 verteilte Auswerfer aus dem Boden der Hohlmatrize 7 ausgefahren, was zum Herauslösen des angestauchten Rohrstücks 5 aus der Hohlmatrize 1 führt.

Das zunächst im geraden Zustand angestauchte Rohrstück 5 kann bedarfsweise anschließend Biegeprozessen unterzogen werden.

Ausführungsbeispiel 2:

Das gerade Zwischenstück einer Pkw-Auspuffanlage zwischen Katalysator und Nachschalldämpfer soll gleichzeitig an beiden Rohrenden 6 mit Wandverstärkungen zur Sicherung ausreichend belastungsfähiger Schweißverbindungen ausgestattet werden.

Dazu wird, wie aus Fig. 3 ersichtlich, eine geteilte Ringmatrize 3 zum Einsatz gebracht. Die Ringmatrize 3 hat eine Gesamtlänge von 1000 mm. Sie verfügt an beiden Enden über Bereiche in denen der allgemeine Innendurchmesser der Ringmatrize 3 von 50 mm auf 55 mm aufgeweitet ist. Die Länge der aufgeweiteten Bereiche beträgt jeweils 100 mm. Das in die Hohlmatrize eingelegte Rohrstück 5 mit einem Außendurchmesser von etwa 50 mm und einer Wanddicke von 2 mm besitzt eine Länge von 900 mm.

Die an beiden Enden der geteilten Ringmatrize 3 einzuschiebenden Axialkolben 4 sind wie im Ausführungsbeispiel 1 mit axialen Bohrungen 8 und radialen Bohrungen 9 ausgestattet. Der Preßsitzbereich 14 bildet sich nach gleichzeitigem Anlegen einer Anfangsschubkraft an beiden Axialkolben 4 und nach Ausfüllung des Preßsitzbereiches 14 mit einer als Wasser-Oel-Emulsion beschaffenen Druckflüssigkeit zwischen den Stirnseiten der Axialkolben 4 heraus und führt zur Lagefixierung des Rohrstücks 5 in der Ringmatrize 3.

Nach Abschluß der infolge gleichzeitiger Erhöhung der Schubkräfte an den Axialkolben 4 und des Druckes der Druckflüssigkeit bewirkten plastischen Verformung beider Rohrenden 6 bis zur vollständigen Ausfüllung der Wirkfugen 17 mit dem Material der Rohrwandung besitzt das eingelegte Rohrstück 5 eine Gesamtlänge von ca. 840 mm. Die angestauchten Rohrenden 6 weisen nun bei unverändertem Innendurchmesser von 46 mm über jeweils 20 mm Länge eine Wanddicke von 4,5 mm auf.

Nach Zerlegung der geteilten Ringmatrize 3 ist das beiderseitig angestauchte Rohrstück 5 für die weitere Bearbeitung herausnehmbar. Es kann bedarfsweise im erforderlichen Umfang mit Biegungen versehen werden.

Ausführungsbeispiel 3:

Als Teil einer strömungstechnisch optimierten Auspuffanlage mit anspruchsvoller Geometrie wird ein gebogenes Rohrstück 5 mit verdicktem Rohrende 6 für die Aufnahme eines Anschlußflansches benötigt.

Dazu wird eine geteilte Ringmatrize, wie in Fig. 2 dargestellt, verwendet, die zur Aufnahme eines vorgebogenen Rohrstücks 5 vorgesehen ist.

Das Anstauchen eines Rohrendes 6 erfolgt dabei in einem ungebogenen Endbereich des Rohrstücks 5.

Nach dem Einlegen des Rohrstücks 5 und dem Verschließen der geteilten Ringmatrize 3 erfolgt am nicht anzustauchenden Ende des Rohrstücks 5 das Einsetzen eines Rohrverschlusses derart, das sich der vor dem Rohrverschluß bei Druckbeaufschlagung mittels Druckflüssigkeit ausbildende Preßsitzbereich 14 ausschließlich im von der Ringmatrize 3 umschlossenen Rohrlängenbereich befindet.

Das Einsetzen und Belasten des Axialkolbens 4 mit einer Schubkraft, sowie das Anwenden eines Innendrucks mittels Druckflüssigkeit, für die im vorliegenden Beispiel ein Mineraloel verwendet wird, erfolgt analog dem Ausführungsbeispiel 2.

Auf diese Weise erhält das gebogene Rohrstück mit einem Außendurchmesser von 50 mm und einer Wanddicke von 2 mm ein angestauchtes Rohrende mit einer Länge von 25 mm, wobei die Wanddicke in diesem Bereich bei einem Außendurchmesser von 55 mm etwa 4,5 mm beträgt.

Nach Abschluß des Anstauchvorganges wird der Rohrverschluß entfernt und die Ringmatrize 3 geöffnet. Das herausnehmbare gebogene angestauchte Rohrstück 5 steht damit für die Komplettierung mit einem Anschlußflansch zur Verfügung.

**Bezugszeichenliste**

1 -  geschlossene Hohlmatrize
2 -  geteilte Hohlmatrize
3 -  geteilte Ringmatrize
4 -  Axialkolben
5 -  Rohrstück
6 -  Rohrende
7 -  Boden der Hohlmatrize
8 -  axiale Bohrung für das Druckmedium
9 -  radiale Bohrung für das Druckmedium
10 -  Matrizenprofilierung
11 -  Haltekante
12 -  Dichtfläche
13 -  Trennfuge der Matrize
14 -  Preßsitzbereich
15 -  Spitznut
16 -  Dichtschulter
17 -  Wirkfuge

**Patentansprüche**

1.  Verfahren zum Anstauchen von Rohrenden (6) durch plastische Verformung, bei dem das zu verformende Rohr (5) mittels abgesetztem Axialkolben (4) einem Axialdruck ausgesetzt wird, wobei das Rohr (5) in einer den Rohraußenmaßen entsprechenden Matrize (1,2,3) festgelegt wird und wobei in dem zu verformenden Bereich des Rohres (5) die Matrize (1,2,3) mit einem auf die nach dem Verformungsvorgang vorgesehenen Enddimensionen des Rohres (5) abgestimmten Profil (10) versehen ist, dadurch gekennzeichnet daß das Rohr (5) in dem zu verformenden Bereich mittels über kolbenseitige Radialbohrungen (9) zugeführte Druckflüssigkeit einem Radialdruck ausgesetzt wird und daß durch die auch im Rohrinnern wirkende Druckflüssigkeit ein Preßsitz (14) eines nicht anzustauchenden Rohrbereiches in der Matrize (1,2,3) bewirkt wird.

2.  Vorrichtung zum Anstauchen von Rohren nach dem Verfahren gemäß Anspruch 1, bestehend aus einer profilierten Matrize (1,2,3) zum Einlegen des Rohres (5), wobei die Matrize (1,2,3) in dem durch eine Haltekante (11) begrenzten, anzustauchenden Bereich (17) einen Abstand zur Rohraußenwand aufweist, der der Verstärkung der Rohrwandung entspricht, und einem Axialkolben (4) mit einem Rohreinführungsabschnitt, der dem Innendurchmesser des Rohres (5) angepaßt ist, einer radial auswärtsspringenden, mit der Rohrstirnseite in Anlage kommenden Dichtschulter (16), und weiter bestehend aus einer axialen Bohrung (8) sowie radialen Bohrungen (9), über die durch ein unter Druck stehendes Fluid das Rohrinnere sowie die Rohrenden in dem Bereich der vorgesehenen Verformung radial beaufschlagbar sind.

3.  Vorrichtung zum Anstauchen von Rohren nach Anspruch 2, dadurch gekennzeichnet, daß der Axialkolben (4) eine Durchflußöffnung (8) in Axialrichtung aufweist, von der Radialöffnungen (9) zur Außenwandung des Axialkolbens (4) zur Druckbeaufschlagung der Rohrinnenseite im Stauchbereich führen.

4.  Vorrichtung nach Anspruch 2 oder 3, dadurch gekennzeichnet, daß die profilierte Matrize (1, 2, 3) als geschlossene Hohlmatrize (1), als geteilte Hohlmatrize (2) oder als geteilte Ringmatrize (3) ausgebildet ist, und der Übergang vom lichten Durchmesser der Matrize (1, 2, 3) zum aufgeweiteten Teil der Matrizenprofilierung (10) im Stauchbereich als Haltekante (11) ausgebildet ist, und der Übergang vom die radialen Bohrungen (9) aufweisenden Bereich des Axialkolbens (4) zum den erweiterten Bereich der Matrize (10) abschließenden Bereich des Axialkolbens (4) als Dichtschulter (16) ausgebildet ist.

5.  Vorrichtung nach einem der vorhergehenden Ansprüche 2 - 4, dadurch gekennzeichnet, daß der Boden der Hohlmatrize mit einer die Rohrwand erfassenden und als Dichtelement wirkenden Spitznut (15) ausgestattet ist.

**Claims**

1.  Method for upsetting tube ends (6) by plastic deformation, where the tube (5) to be deformed is subjected to axial pressure by means of an offset axial piston (4), the tube (5) being located in a die (1, 2, 3) corresponding to the external dimensions of the tube and the die (1, 2, 3) being provided, in the zone of the tube (5) that is to be deformed, with a profile (10) matched to the final dimensions of the tube (5) envisaged under the deformation operation, characterised in that in the zone that is to be deformed the tube (5) is subjected to radial pressure by means of pressurised fluid supplied via radial bores (9) situated on the piston side and that the action of the pressurised fluid also operating in the tube interior brings about an interference fit (14) of a zone of the tube that is not to be upset in the die (1, 2, 3).

2. Apparatus for upsetting tubes by the method according to claim 1, consisting of a profiled die (1, 2, 3) for placement of the tube (5), the die (1, 2, 3) - in the zone (17) which is to be upset and which is delimited by a retaining edge (11) - being at a distance from the external wall of the tube that is the same as the increase in the tube wall thickness, and an axial piston (4) with a tube introduction section that is adapted to the internal diameter of the tube (5), a radially outward-snapping sealing shoulder (16) which makes contact with the front end face of the tube, and also consisting of an axial bore (8) and radial bores (9) via which the tube interior and the tube ends can be acted upon radially by a pressurised fluid in the zone of the envisaged deformation.

3. Apparatus for upsetting tubes according to claim 2, characterised in that the axial piston (4) features a throughflow port (8) in the axial direction, from which radial ports (9) lead to the external wall of the axial piston (4) for the application of pressure to the internal face of the tube in the upsetting zone.

4. Apparatus according to claim 2 or 3, characterised in that the profiled die (1, 2, 3) is in the form of a closed hollow die (1), a split hollow die (2) or a split ring die (3), and the transition from the clear diameter of the die (1, 2, 3) to the widened-out part of the die profiling (10) is configured as a retaining edge (11) in the upsetting zone, and the transition from the zone of the axial piston (4) featuring the radial bores (9) to the zone of the axial piston (4) that terminates the broadened zone of the die (10) is configured as a sealing shoulder (16).

5. Apparatus according to any of preceding claims 2 to 4, characterised in that the floor of the hollow die is equipped with an acute-angled groove (15) which grips the tube wall and acts as a sealing element.

**Revendications**

1. Procédé pour refouler des extrémités tubulaires (6) par déformation plastique, dans lequel le tube (5) déformé est exposé à une pression axiale, au moyen d'un piston axial (4) dimensionnellement en retrait, le tube (5) étant fixé dans une matrice (1, 2, 3) correspondant aux dimensions extérieures du tube, la matrice (1, 2, 3) étant dotée, dans la zone à déformer du tube (5) d'un profil (10) adapté aux dimensions finales, prévues après le processus de déformation, du tube (5), caractérisé en ce que le tube (5) est exposé, dans la zone à déformer, à une pression radiale, au moyen d'un liquide sous pression amené par des perçages radiaux (9) ménagés côté piston, et en ce qu'un ajustement serré (14) d'une zone tubulaire ne devant pas être refoulée est provoqué dans la matrice (1, 2, 3), par le liquide sous pression, agissant également à l'intérieur du tube.

2. Dispositif pour refouler des tubes, selon le procédé suivant la revendication 1, constitué d'une matrice (1, 2, 3) profilée pour l'insertion du tube (5), la matrice (1, 2, 3) présentant, dans la zone (17) à refouler, délimitée par une arête de retenue (11), par rapport à la paroi extérieure du tube, un espacement correspondant au renforcement d'épaisseur de la paroi tubulaire, et d'un piston axial (4), ayant un tronçon d'introduction de tube adapté au diamètre intérieur du tube (5), d'un épaulement d'étanchéité (16), faisant saillie radialement vers l'extérieur, venant en appui avec la face frontale du tube, et constitué en outre d'un perçage axial (8) ainsi que de perçages radiaux (9), par l'intermédiaire desquels, au moyen d'un fluide placé sous pression, l'intérieur du tube ainsi que les extrémités du tube sont susceptibles d'être sollicitées radialement dans la zone de la déformation prévue.

3. Dispositif de refoulement de tubes selon la revendication 2, caractérisé en ce que le piston axial (4) présente une ouverture de passage (8) en direction axiale, d'où des ouvertures radiales (9) mènent vers la paroi extérieure du piston axial (4), en vue de solliciter par une pression la face intérieure du tube, dans la zone de refoulement.

4. Dispositif selon la revendication 2 ou 3, caractérisé en ce que la matrice (1, 2, 3) profilée est réalisée sous la forme de matrice creuse (1) fermée, de matrice creuse (2) divisée, ou de matrice annulaire (3) divisée, et la transition, entre le diamètre libre de la matrice (1, 2, 3) et la partie élargie du profilage de matrice (10), dans la zone de refoulement, est réalisée sous la forme d'une arête de retenue (11), et la transition entre la zone, présentant les perçages radiaux (9), du piston axial (4) et la zone, délimitant la zone élargie de la matrice (10) du piston axial (4), est réalisée sous la forme d'épaulement d'étanchéité (16).

5. Dispositif selon l'une des revendications 2 à 4 précédentes, caractérisé en ce que le fond de la matrice creuse est doté d'une gorge en pointe (15), saisissant la paroi tubulaire et agissant comme élément d'étanchéité.

# Fig. 1

**Fig. 2**

# Fig. 3

# Fig. 4